# EUROPÄISCHE PATENTSCHRIFT

(11) **EP 2 689 218 B1**
(45) Veröffentlichungstag und Bekanntmachung des Hinweises auf die Patenterteilung: **01.04.2015**
(21) Anmeldenummer: 11710483.6
(22) Anmeldetag: 22.03.2011
(51) Int. Cl.: G01F 15/14, G01F 1/115, G01F 1/075, B05B 12/00

(54) **GERÄT ZUR MESSUNG EINES WASSERSTROMS**
APPARATUS FOR MEASURING A FLOW OF WATER
APPAREIL POUR MESURER UN ÉCOULEMENT D'EAU

(43) Veröffentlichungstag der Anmeldung: 29.01.2014
(73) Patentinhaber: HUSQVARNA AB, 561 82 Huskvarna (SE)
(72) Erfinder: MÜLLER-BRAUN, Matthias, 89233 Neu-Ulm (DE)
(74) Vertreter: Finkele, Rolf
(86) Internationale Anmeldenummer: PCT/EP2011/054344
(87) Internationale Veröffentlichungsnummer: WO 2012/126518

(56) Entgegenhaltungen:
- EP-A1- 1 884 292
- WO-A1-2011/055362
- US-A- 4 936 508
- US-A1- 2011 247 431

## Beschreibung

Die Erfindung betrifft ein Gerät zur Messung eines Wasserstroms, insbesondere in Pflanzenbewässerungseinrichtungen.

Zur dosierten Bewässerung von Pflanzen ist es bekannt, Geräte zur Messung eines Wasserstroms einzusetzen, welche Durchflussrate und/oder kumulierte Wassermenge des durch einen Kanal des Geräts strömenden Wasserstroms messen. Das Messergebnis kann angezeigt und/oder in verschiedener Weise zur Steuerung von Bewässerungseinrichtungen weiter verarbeitet werden.

Ein aus der WO 2010/141979 A1 bekanntes Gerät enthält in an sich typischer Bauart in dem durchströmten Kanal einen Turbinenrotor mit einer Magnetanordnung, dessen Drehung durch einen außerhalb des Kanals angeordneten Sensor detektiert und in einer Elektronikeinrichtung ausgewertet wird. Die Elektronikeinrichtung ist in einer Kammer des Gerätehauses angeordnet, welche durch einen mit Schrauben fixierten Deckel abgedeckt ist. An den entgegen gesetzten Enden des Kanals können Kupplungsteile eines wasserführenden Steckkupplungssystems angeordnet sein. Die EP 1884292 A1 beschreibt eine Gartenspritze mit einem Wasserstrommesser und einer Anzeige.

US 4 936 508 A beschreibt ein Gerät zur Messung eines Wasserstroms durch einen zwischen zwei Anschlüssen durch das Gerät führenden Kanals, bei welchem ein Gehäuseteil den Kanal und an dessen entgegengesetzten Enden Kanalöffnungen bildet. Bezüglich der Längsachse des Kanals ist in dem Gehäuseteil durch eine Austragung eine den Kanal ringförmig einschließende Kammer ausgebildet, in welche eine Elektronikeinrichtung zur Erfassung und Auswertung der Rotation eines im Kanal befindlichen Rotors eingebracht ist. Um die in die Kammer eingebrachte Spule des Signalaufnehmers und deren auf einer halbringförmigen Platine aufgebrachte Auswertelektronik vor Wasser zu schützen, ist die Kammer mittels einer Silikondichtung abgerichtet. Aus des geschlossenen Kammer heraus ist die Elektronikeinrichtung durch eine elektrische Leitung mit einem ringförmigen akustischen Signalgeber verbunden, welcher an die Außenwandung des benachbarten Kanalanschlusses geschweißt ist. Hierbei verdeckt der fixierte Signalgeber teilweise den Zugang zur Kammer.

Der vorliegenden Erfindung liegt die Aufgabe zugrunde, einen insbesondere in der Herstellung, der Montage und der Wartung vorteilhaften Aufbau eines Geräts zur Messung eines Wasserstroms anzugeben.

Die Erfindung ist im unabhängigen Anspruch beschrieben. Die abhängigen Ansprüche enthalten vorteilhafte Ausgestaltungen und Weiterbildungen der Erfindung.

Die Ausbildung zweier Gehäuseteile in der Art, dass diese in bezüglich der Längsachse des Kanals axialer Richtung zusammenfügbar sind, ist hinsichtlich des Spritzgusswerkzeugs insbesondere eines den Kanal enthaltenden ersten Gehäuseteils von besonderem Vorteil. Ein solches erstes Gehäuseteil bildet gegen den Kanal seitlich versetzt eine in axialer Richtung offene Tasche, in welcher insbesondere eine Elektronikeinrichtung angeordnet sein kann. In der Ausführung liegt das zweite Gehäuseteil zumindest teilweise in einer solchen Tasche ein. Die Tasche bildet einen Teil der Kammer für die Elektronikeinrichtung. Das zweite Gehäuseteil bildet einen Träger für die Elektronikeinrichtung, so dass die Elektronikeinrichtung zusammen mit dem zweiten Gehäuseteil relativ zu dem ersten Gehäuseteil axial verschiebbar ist.

Die an dem ersten Gehäuseteil ausgebildete Tasche kann in ihrer nach radial bezüglich des Kanals außen liegenden Wand eine Aussparung als Sichtfenster auf ein Anzeigefeld der Elektronikeinrichtung aufweisen. Zum Schutz des Anzeigefelds ist diese vorteilhafterweise durch eine transparente Scheibe abgedeckt, welche vorteilhafterweise Teil des zweiten Gehäuseteils sein kann. In bevorzugter Ausführung ist das zweite Gehäuseteil als ein Spritzgusskörper aus transparentem Material ausgeführt, welcher mit einer Wandfläche die transparente Scheibe bildet.

Das zweite Gehäuseteil ist mittels eines an einem Ende des Kanals des ersten Gehäuses auf dieses aufschraubbares Fixierelement relativ zum ersten Gehäuseteil festlegbar, wobei die lösbare Festlegung mittels eines vorzugsweise werkzeuglos betätigbaren Fixierelements erfolgt. Das zweite Gehäuseteil kann hierfür vorteilhafterweise den Kanal um mehr als 180°, vorzugsweise vollständig umgreifen. Das Fixierelement kann in bevorzugter Ausführung durch ein Kupplungsteil einer wasserführenden Steckkupplung gebildet sein. Das Fixierelement ist vorteilhafterweise mit einem Innengewinde auf ein Außengewinde des Kanalendes des ersten Gehäuseteils aufschraubbar und kann insbesondere als ein als Hahnstück bezeichnetes gebräuchliches Kupplungsteil mit einem Stecknippel ausgeführt sein.

Das zweite Gehäuseteil enthält vorteilhafterweise ein Batteriefach, dessen Öffnung vorzugsweise durch eine Dichtung wasserdicht verschließbar ist. Die Dichtung kann zugleich eine durch den Benutzer greifbare Klemmhalterung für die Batterie zum leichten Entnehmen der Batterie aus dem Batteriefach bilden. Die Öffnung des Batteriefachs ist im Betriebszustand des Geräts mit zusammengefügten ersten und zweiten Gehäuseteilen vorteilhafterweise verdeckt und nur durch Lösen des zweiten Gehäuseteils vom ersten Gehäuseteil zugänglich.

Eine Turbinenanordnung ist vorteilhafterweise lösbar in dem Kanal angeordnet, wobei Einsetzen und Entnehmen der Turbinenanordnung in den bzw. aus dem Kanal vorzugsweise durch die Kanalöffnung an dem zweiten Kanalende erfolgen und damit von der Verbindung des ersten und des zweiten Gehäuseteils unabhängig sind.

Die Erfindung ist nachfolgend anhand bevorzugter Ausführungsbeispiele unter Bezugnahme auf die Abbildungen noch eingehend veranschaulicht. Dabei zeigt:
- Fig. 1: Komponenten einer bevorzugten Ausführung,
- Fig. 2: ein aus den Komponenten nach Fig. 1 zusammen gebautes Gerät,
- Fig. 3: eine Zusammenbaudarstellung eines Einsatzkörpers mit Elektronik-Komponenten,
- Fig. 4: die Teile der Fig. 3 zusammen gesetzt,
- Fig. 5: eine andere Ansicht zu Fig. 4,
- Fig. 6: eine Schnittdarstellung von Gehäuseteilen mit Fixiermittel,
- Fig. 7: einen Schnitt durch ein Gerät nach Fig. 2.

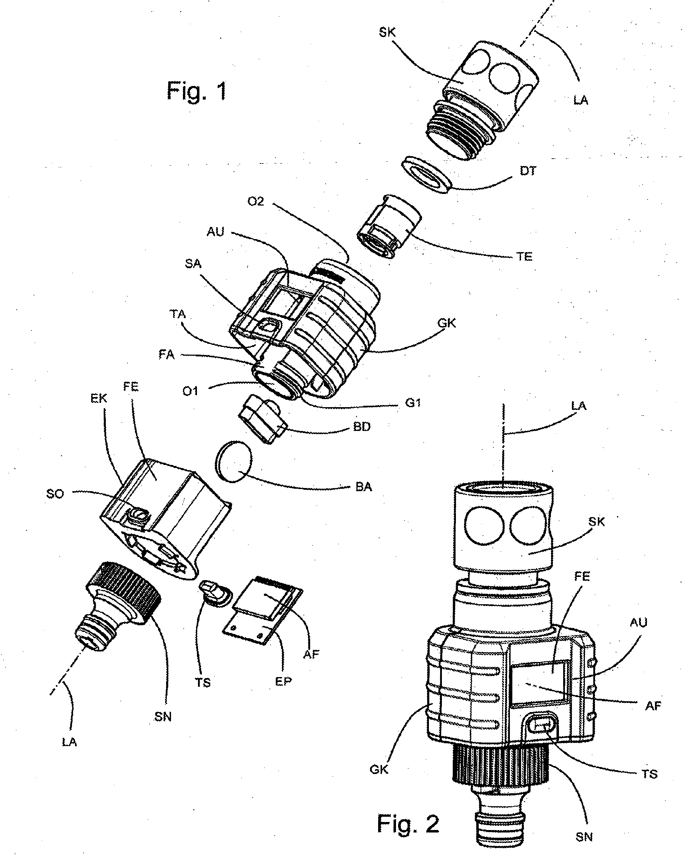

Fig. 1 zeigt in Schrägdarstellung wesentliche Komponenten einer bevorzugten Ausführung eines erfindungsgemäßen Geräts zur Messung eines Wasserstroms. Die Komponenten enthalten insbesondere einen Grundkörper GK, welcher vorteilhafterweise als Kunststoff-Spritzgusskörper aus einem vorzugsweise nicht transparenten Material hergestellt sein kann. In dem Grundkörper GK ist ein wasserdurchströmbarer Kanal zwischen in Richtung einer Längsachse LA entgegen gesetzt liegenden ersten und zweiten Kanalöffnungen 01, 02 ausgebildet. Bei der Kanalöffnung 01 ist ein erstes Gewinde G1 als Außengewinde auf einem den Kanal umgebenden Gehäuseabschnitt ausgebildet, wobei an einer Seite eine Abflachung FA vorgesehen ist, an welcher die Gewindegänge fehlen. Sofern der Kanal in anderer Ausführung nicht linear durch das Gehäuse durchgeführt ist, können an den beiden Kanalöffnungen die jeweiligen Längsachsen der Kanalausgänge voneinander abweichen.

In dem Grundkörper GK ist eine zu dem Kanalende mit der ersten Kanalöffnung 01 hin axial offene Tasche TA ausgebildet, welche auf der dem Kanalende bei der ersten Kanalöffnung 01 abgewandten axialen Seite geschlossen ist. In dem Grundkörper ist eine Fensteraussparung AU sowie eine demgegenüber kleinere Öffnung SO in der vom Kanal weg gerichteten Gehäuseaußenfläche ausgebildet.

Eine die Rotoranordnung bildende Turbineneinheit TE ist durch die zweite Kanalöffnung 02 des Grundkörpers GK in den Kanal einsetzbar und in diesem festlegbar, wofür vorteilhafterweise ein Kupplungsteil, insbesondere eine Schlauchkupplung SK eines Steckkupplungssystems mit einem Gegengewinde in ein in Fig. 1 nicht sichtbares Innengewinde um den Kanal durch den Grundkörper GK bei der zweiten Kanalöffnung 02 einschraubbar ist. Zwischen Turbineneinheit TA und Kupplungsteil SK wird vorteilhafterweise eine gummielastische Dichtung DT durch das Kupplungsteil SK eingefügt und die Turbineneinheit TE, die Geometrie des Kanals und das Kupplungsteil SK.sind so aufeinander abgestimmt, dass bei eingeschraubtem Kupplungsteil SK die Turbineneinheit TE unter elastischer Verformung der Dichtung DT in dem Kanal axial festgelegt und verspannt ist. Die Turbineneinheit TE enthält einen um die Längsachse LA rotierbaren Turbinenrotor, dessen Drehung um die Längsachse LA bei Wasserdurchstrom durch den Kanal durch eine Elektronikeinrichtung berührungslos durch die Kanalwand hindurch detektiert und ausgewertet wird, wobei typischerweise eine Detektion über eine Permanentmagnetanordnung am Rotor und einen Magnetsensor in der Elektronikeinrichtung erfolgen kann.

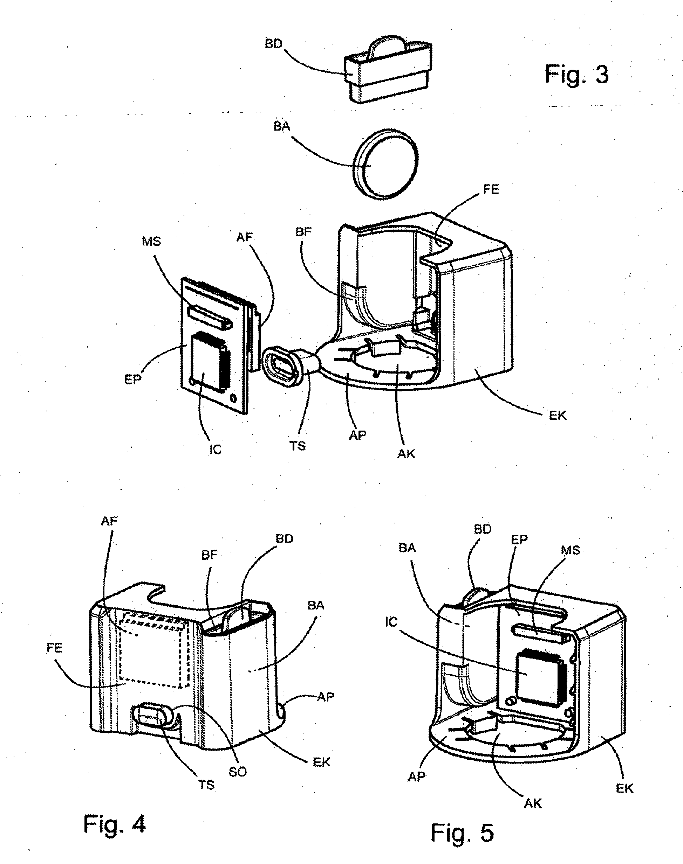

Ein Einsatzkörper EK, welcher vorteilhafterweise gleichfalls als ein Kunststoff-Spritzgusskörper ausgeführt sein kann, dient mit einem Abschnitt als Träger für Komponenten einer Elektronikeinrichtung, was anhand von Fig. 3 bis Fig. 6 noch detaillierter dargestellt ist. Insbesondere enthält der Einsatzkörper EK ein Batteriefach BF zur Aufnahme einer Batterie BA, wobei eine gummielastische Batteriedichtung BD zum einen das Batteriefach verschließt und vorteilhafterweise zum anderen zugleich klemmend die Batterie BA hält, so dass bei Abziehen der gummielastischen Dichtung BD von der Öffnung des Batteriefachs zugleich auch die Batterie BA an der Dichtung klemmend gehalten aus dem Batteriefach entnehmbar ist.

Der Einsatzkörper EK besitzt einen quer zur Längsachse LA verlaufenden plattenförmigen Abschnitt AP, in welchem eine Aussparung AK ausgebildet ist, welche in Größe und Form auf den den Kanal bei der Kanalöffnung 01 umgebenden Stutzen abgestimmt ist. Von dem plattenförmigen Abschnitt AP ragt ein dreidimensional geformter Teil des Einsatzkörpers als Elektronik-Trägerabschnitt ET in axialer Richtung weg, welcher neben dem Batteriefach auch eine Aufnahme für eine Elektronikplatine EP bildet und welcher in axialer Richtung in die Tasche TA des Grundkörpers GK einschiebbar ist, wobei dann der plattenförmige Abschnitt AP mit der Aussparung AK über den Stutzen des Grundkörpers GK am Kanalende bei der Kanalöffnung 01 mit dem ersten Gewinde G1 geschoben wird und den Stutzen vollständig umgreift. Die Elektronik-komponenten werden vor Zusammenfügung von Grundkörper GK als erstem Gehäuseteil und Einsatzkörper EK als zweitem Gehäuseteil in dem zweiten Gehäuseteil angeordnet wie in Fig. 3 bis Fig. 5 dargestellt ist.

Wenn der Einsatzkörper EK mit dem Grundkörper GK in der beschriebenen Weise, in welcher der Elektronik-Trägerabschnitt des Einsatzkörpers EK in der Tasche TA einliegt, zusammen gefügt ist, ragt der Stutzen bei der Kanalöffnung 01 mit dem Gewinde G1 über den plattenförmigen Abschnitt AP des Einsatzkörpers axial hinaus. Ein Kupplungsteil SN, welches insbesondere als sogenanntes Hahnstück mit einem Stecknippel einer wasserführenden Steckkupplung ausgeführt sein kann, wird manuell werkzeuglos mit einem in dem Kupplungsteil SN ausgebildeten Innengewinde als Gegengewinde zu dem Gewinde G1 auf den Grundkörper GK aufgeschraubt und fixiert dabei zugleich den Einsatzkörper EK axial an dem Grundkörper GK.

Fig. 2 zeigt in Schrägdarstellung ein fertig zusammen gebautes Gerät, welches mittels der komplementären Steckkupplungsteile SN und SK auf vorteilhafte, an sich bekannte Weise in eine wasserführende Leitung mit einem Steckkupplungssystem eingefügt werden kann. Eine Einfügung in eine wasserführende Leitung kann auch auf andere Weise als über die spezielle Ausführung der dargestellten Kupplungsteile erfolgen.

Wenn zu Wartungszwecken, beispielsweise zum Wechsel der Batterie BA, der Benutzer Zugriff auf die elektronischen Komponenten haben will, kann durch Abschrauben des Kupplungsteils SN von dem Gewinde G1 des Grundkörpers GK die Fixierung des Einsatzkörpers EK in dem Grundkörper GK gelöst und der Einsatzkörper EK samt den Elektronikkomponenten von dem Grundkörper GK abgenommen werden, wonach die elektronischen Komponenten leicht zugänglich sind.

Die elektronischen Komponenten können insbesondere eine Elektronikplatine EP enthalten, auf welcher wie in Fig. 3 bis Fig. 5 ersichtlich ist, insbesondere ein Anzeigefeld AF angeordnet ist, welches zur Darstellung von Messergebnissen und/oder Einstellungen des Geräts in an sich bekannter Weise dienen kann. Auf der der Anzeigefläche AF abgewandten Seite der Elektronikplatine kann insbesondere ein Magnetsensor MS vorgesehen sein, welcher durch die Anordnung auf der der Anzeigefläche AF abgewandten Seite nahe bei der Turbineneinheit, von dieser aber durch die Kanalwand des Grundkörpers getrennt, angeordnet werden kann. Auf der Elektronikplatine EP kann ferner eine integrierte Schaltungsanordnung IC angeordnet sein, welche je nach Ausstattung des Geräts verschiedene Funktionen erfüllen kann.

Der Einsatzkörper FE bildet vorteilhafterweise mit einer im zusammen gebauten Zustand des Geräts der Fensteraussparung AU zugewandten Fensterfläche ein transparentes Fenster, so dass ein Benutzer durch die Fensteraussparung AU und die transparente Fensterfläche FE des Einsatzkörpers die auf der Anzeigefläche AF angezeigte Information ablesen kann. Vorzugsweise besteht der gesamte Einsatzkörper EK materialhomogen aus transparentem Material. Durch die transparent materialhomogene Ausführung des zweiten Gehäuseteils EK ist keine Abdeckscheibe als weiteres Bauteil erforderlich. Der wässerführende Kanal ist vollständig durch das nicht transparente Material des Grundkörpers umgeben, so dass eine Algenbesiedelung des Kanals vermieden bleibt. Im Bereich der Fensterfläche FE kann wenigstens eine, vorzugsweise beide der die Fensterfläche zur Aussparung AU bzw. zur Anzeigefläche AF hin begrenzenden Oberflächen des Einsatzkörpers mit besonderer Oberflächenbeschaffenheit, beispielsweise poliert, ausgeführt sein, um insbesondere die Ablesbarkeit von auf der Anzeigefläche AF angezeigter Information zu verbessern. Eine solche Oberflächengestaltung kann bereits bei der Ausführung des Spritzgusswerkzeugs vorgegeben sein.

Für die elektronischen Einrichtungen ist ferner wenigstens ein Bedienelement in Form eines Tastschalters TS vorgesehen, welcher mit einem Bedienende durch eine Öffnung SO des Einsatzkörpers und durch eine im zusammen gebauten Zustand mit dieser fluchtende Aussparung SA im Grundkörper GK hindurch greift und entgegen einer Rückstellkraft, welche vorzugsweise allein durch elastische Ausbildung des Bedienelements TS gegeben ist, in Richtung der Elektronikplatine EP gedrückt werden kann und dort mit Sensorflächen, insbesondere Kontaktflächen zusammenwirkend eine Bedienung des Geräts durch einen Benutzer ermöglicht. Vorteilhafterweise kann das Bedienelement TS auch beim Zusammenfügen der durch Grundkörper GK und Einsatzkörper EK gebildeten Gehäuseteile durch Einrasten in die Aussparung SA in der Außenwandfläche der Tasche TA des Grundkörpers GK eine vorläufige Festlegung des Einsatzkörpers EK an dem Grundkörper bei der Montage bilden, so dass für den nächsten Montageschritt des Aufschraubens des Kupplungsteils SN der Einsatzkörper bereits selbsthaltend an dem Grundkörper festgelegt ist. Zum Trennen der beiden Gehäuseteil GK und EK ist durch das Bedienelement TS nach Abschrauben des Kupplungsteils SN von dem Gewinde G1 der Einsatzkörper vorerst noch an dem Grundkörper GK gehalten, kann dann aber durch Eindrücken des Bedienelements TS durch die Aussparung SA hinter die Außenwand der Tasche TA des Grundkörpers GK in axialer Richtung von dem Grundkörper GK abgezogen werden.

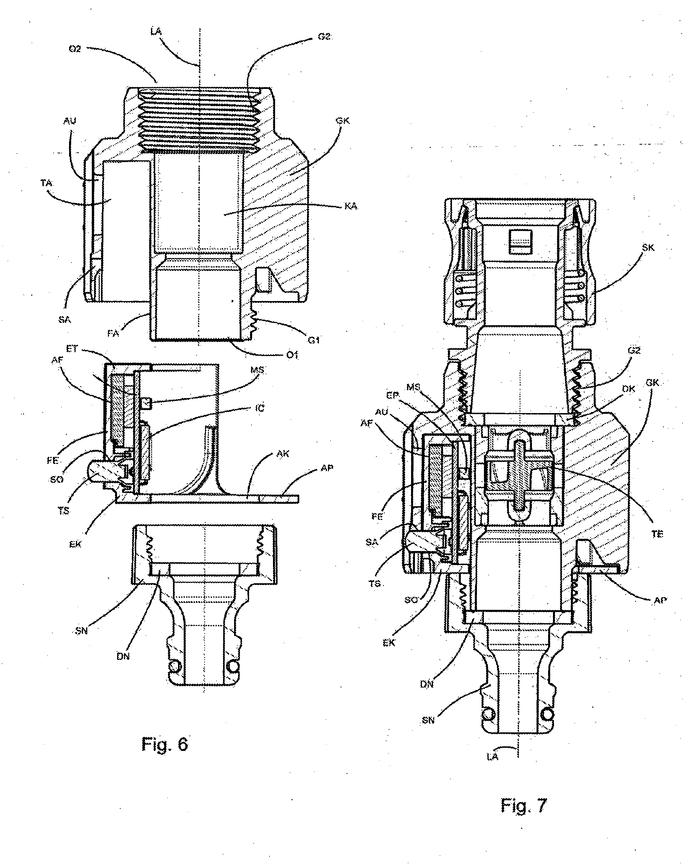

Fig. 6 zeigt Grundkörper GK, Einsatzkörper EK und Kupplungsteil SN in zum Zusammenbau vorbereiteter Relativposition axial bezüglich der Längsachse LA gegeneinander versetzt. Durch Aufschieben des Einsatzkörpers EK auf den Grundkörper GK in axialer Richtung, wobei der Elektronikträgerabschnitt ET des Einsatzkörpers in die Tasche TA des Grundkörpers GK eintaucht und der plattenförmige Abschnitt AP mit der Aussparung AK den die Öffnung 01 des Kanals KA umgebenden Gewindestutzen G1 umgreift, wird durch Einschnappen des Bedienelements TS in die Aussparung SA der Einsatzkörper EK vorläufig am Grundkörper GK gehalten und durch Aufschrauben des Kupplungsteils SN mit dessen Innengewinde auf das Gewinde G1 des Grundkörpers GK an diesem fixiert. Aus Fig. 6 ist auch anschaulich ersichtlich, dass durch die Abflachung FA auf der der Tasche TA zugeordneten Seite des den Kanal KA umgebenden Stutzens bei der Öffnung 01 vorteilhaft das Volumen der Tasche TA sehr gut ausgenutzt werden kann, indem die elektronischen Komponenten im Trägerabschnitt ET des Einsatzkörpers EK im Vergleich zu einer Ausführung mit umlaufendem Gewinde G1 näher in Richtung der Längsachse LA und damit auch der Magnetsensor MS näher an der Turbineneinheit TE positioniert werden können.

Fig. 7 zeigt einen Schnitt durch ein vollständig zusammen gesetztes Gerät nach Fig. 2, aus welchem insbesondere auch die relative Lage des Magnetsensors bezüglich der Turbineneinheit TE und die Position der Anzeigefläche AF hinter der Aussparung AU des Grundkörpers und der Fensterfläche FE des Einsatzkörpers erkennbar sind. Die Elektronikplatine EP kann vorteilhafterweise durch Abstützung des Magnetsensors MS und der integrierten Schaltung IC gegen die Kanalwand zwischen Tasche und Grundkörpers und der Turbineneinheit leicht klemmend in dem Einsatzkörper und der Tasche einliegen. Mittels des Kupplungsteils SN ist der plattenförmige Abschnitt AP des Einsatzkörpers axial gegen Gegenflächen des Grundkörpers GK gedrückt und somit fest relativ zu diesem fixiert. Das Kupplungsteil SN kann in gebräuchlicher Weise eine Ringdichtung DN als Abdichtung gegen die Stirnkanten des Kanalendes bei der Öffnung 01 enthalten.

Erstes Gehäuseteil GK und zweites Gehäuseteil EK bilden zusammen den weit überwiegenden Teil, insbesondere wenigstens 90 % der Masse und der Außenfläche des Gerätegehäuses, zu welchem dabei die Kupplungsteile SN, SK, die Turbineneinheit TE und die elektronischen Komponenten nicht zugerechriet sind.

Vorteilhafterweise können die Turbineneinheit TE einerseits und die elektronischen Komponenten andererseits unabhängig voneinander durch Lösen des zweiten Kupplungsteils SK oder durch Lösen des ersten Kupplungsteils SN von dem Grundkörper zu Wartungszwecken gelöst werden, ohne dass das jeweils andere Bauteil gleichzeitig auch vom Grundkörper gelöst werden müßte.

Durch die Verwendung von nur zwei Spritzgussteilen als erstem Gehäuseteil GK und zweitem Gehäuseteil EK und die Fixierung der beiden Gehäuseteile relativ zueinander mittels eines handelsüblichen Kupplungsteils SN ergibt sich ein besonders kostengünstiger und montagefreundlicher Aufbau des Geräts.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens gemäß der Ansprüche abwandelbar.

## Patentansprüche

1. Gerät zur Messung eines Wasserstroms durch einen zwischen zwei Anschlüssen durch das Gerät führenden Kanal (KA), wobei in dem Kanal eine Rotoranordnung (TE) und in einer von dem Kanal (KA) getrennten Kammer eine mit dem Rotor zusammenwirkende Elektronik angeordnet sind,
wobei ein erstes Gehäuseteil (GK) den Kanal (KA) und an dessen entgegen gesetzten Enden Kanalöffnungen (01, 02) und einen ersten und zweiten Anschluss, sowie eine in bezüglich der Längsachse (LA) des Kanals axialer Richtung einseitig offene, die Kammer definierende Tasche (TA) bildet,
**dadurch gekennzeichnet**,
dass die Tasche durch das erste Gehäuseteil und ein zweites Gehäuseteil begrenzt wird, welche bezüglich der Längsachse (LA) des Kanals (KA) in axialer Richtung zusammenfügbar sind,
wobei das zweite Gehäuseteil (EK) die Öffnung der Tasche (TA) abdeckt und wenigstens teilweise in die Tasche (TA) eingreift und einen Träger (ET) für eine Elektronikeinrichtung bildet,
und dass an dem der Öffnung der Tasche (TA) räumlich zugeordneten ersten Anschluss (01) ein das zweite Gehäuseteil (EK) relativ zu dem ersten Gehäuseteil (GK) festlegendes Fixierelement (SN) aufschraubbar ist,
wobei die beiden Gehäuseteile (EK, GK) für Wartungszwecke zerstörungsfrei, vorzugsweise manuell werkzeuglos, voneinander lösbar sind.

2. Gerät nach Anspruch 1, **dadurch gekennzeichnet, dass** das zweite Gehäuseteil (EK) einen quer zur Längsachse (LA) verlaufenden plattenförmigen Abschnitt AP aufweist, in welchem eine Aussparung AK ausgebildet ist, welche in Größe und Form auf den den Kanal bei der Kanalöffnung (01) umgebenden Stutzen abgestimmt ist und von welchem ein dreidimensional geformter Teil des zweiten Gehäuses (EK) als Elektronikträgerabschnitt (ET) in axialer Richtung ragt,
wobei der Trägerabschnitt (ET) neben dem Batteriefach (BF) auch eine Aufnahme für eine Elektronikplatine (EP) bildet und in axialer Richtung in die Tasche (TA) des Grundkörpers (GK) einschiebbar ist.

3. Gerät nach einem der Ansprüche 1 oder 2, **dadurch gekennzeichnet, dass** das zweite Gehäuseteil (EK) mit einem Abschnitt (AP) den Kanal über wenigstens 180° umgreift.

4. Gerät nach Anspruch 3, **dadurch gekennzeichnet, dass** das Fixierelement ein erstes Kupplungsteil (SN) einer Steckkupplung ist.

5. Gerät nach einem der Ansprüche 1 bis 4, **dadurch gekennzeichnet, dass** das zweite Gehäuseteil (EK) ein abdichtbares Batteriefach (BF) enthält.

6. Gerät nach einem der Ansprüche 1 bis 5, **dadurch gekennzeichnet, dass** zwischen erstem (GK) und zweitem (EK) Gehäuseteil eine lösbare Rastverbindung (TS, SO, SA) besteht.

7. Gerät nach Anspruch 6, **dadurch gekennzeichnet, dass** die Rastverbindung durch eine Öffnung (SA) in einer Außenwand des ersten Gehäuseteils (GK) und einem diese durchgreifenden, mit dem zweiten Gehäuseteil verbundenen Bedienelement (TS) gebildet ist.

8. Gerät nach einem der Ansprüche 1 bis 7, **dadurch gekennzeichnet, dass** die Rotoranordnung (TE) durch die Kanalöffnung (02) bei dem zweiten Anschluss in den Kanal (KA) einsetzbar bzw. aus diesem entnehmbar ist.

9. Gerät nach Anspruch 8, **dadurch gekennzeichnet, dass** die Rotoranordnung (TE) in dem Kanal (KA) axial mittels eines in die Kanalöffnung einschraubbaren zweiten Kupplungsteils (SK) einer Steckkupplung axial verspannt festlegbar ist.

## Claims

1. Appliance for the measuring of a stream of water through a channel (KA) leading through the appliance between two connections, wherein a rotor arrangement (TE) is arranged in the channel and an electronics unit, which interacts with the rotor, is arranged in a chamber separate from the channel (KA), wherein a first housing part (GK) forms the channel (KA) and, at the opposite ends thereof, channel openings (01, 02) and a first and second connection as well as a chamber-defining pocket (TA), which is open on one side in the axial direction, as seen in relation to the longitudinal axis (LA) of the channel,
**characterized**
in that the pocket is delimited by the first housing part and a second housing part, which can be joined together in the axial direction, as seen in relation to the longitudinal axis (LA) of the channel (KA),
wherein the second housing part (EK) covers the opening of the pocket (TA) and engages, at least in part, in the pocket (TA) and forms a carrier (ET) for an electronics device,
and in that a fixing element (SN), which secures the second housing part (EK) relative to the first housing part (GK), can be screwed to the first connection (A1), which is spatially assigned to the opening of the pocket (TA),
wherein the two housing parts (EK, GK) can be released from one another for maintenance purposes in a non-destructive manner and preferably manually, without the use of any tools.

2. Appliance according to Claim 1, **characterized in that** the second housing part (EK) has a plate-like portion (AP), which runs transversely to the longitudinal axis (LA) and in which is formed an aperture (AK), which is coordinated in terms of shape and size to the connector enclosing the channel at the channel opening (01) and from which a three-dimensionally formed part of the second housing (EK) projects, in the form of an electronics-carrier portion (ET), in the axial direction,
wherein the carrier portion (ET), in addition to the battery compartment (BF), also forms a mount for an electronics board (EP) and can be pushed in the axial direction into the pocket (TA) of the basic body (GK).

3. Appliance according to either of Claims 1 and 2, **characterized in that** the second housing part (EK) has a portion (AP) engaging around the channel over at least 180°.

4. Appliance according to Claim 3, **characterized in that** the fixing element is a first coupling part (SN) of a plug-in coupling.

5. Appliance according to one of Claims 1 to 4, **characterized in that** the second housing part (EK) contains a sealable battery compartment (BF).

6. Appliance according to one of Claims 1 to 5, **characterized in that** there is a releasable latching connection (TS, SO, SA) between the first housing part (GK) and second housing part (EK).

7. Appliance according to Claim 6, **characterized in that** the latching connection is formed by an opening (SA) in an outer wall of the first housing part (GK) and an operating element (TS), which engages through said opening and is connected to the second housing part.

8. Appliance according to one of Claims 1 to 7, **characterized in that** the rotor arrangement (TE) can be inserted into the channel (KA), and removed therefrom, through the channel opening (02) at the second connection.

9. Appliance according to Claim 8, **characterized in that** the rotor arrangement (TE) can be secured axially in an axially braced manner in the channel (KA) by means of a second coupling part (SK) of a plug-in coupling, it being possible for said coupling part to be screwed into the channel opening.

## Revendications

1. Appareil pour mesurer un écoulement d'eau traversant un canal (KA) conduisant à travers l'appareil en passant entre deux raccords, un agencement de rotor (TE) étant disposé dans le canal et un système électronique interagissant avec le rotor étant disposé dans un compartiment séparé du canal (KA), une première partie de carter (GK) raccordant le canal (KA) et formant au niveau de ses extrémités opposées des ouvertures de canal (01, 02) et un premier et deuxième raccord, ainsi qu'une poche (TA) ouverte sur un côté dans la direction axiale par rapport à l'axe longitudinal (LA) du canal définissant le compartiment ;
**caractérisé en ce que** :
la poche est délimitée par la première partie de carter et une deuxième partie de carter pouvant être assemblées dans la direction axiale par rapport à l'axe longitudinal (LA) du canal (KA) ;
la deuxième partie de carter (EK) recouvre l'ouverture de la poche (TA) et s'engrène au moins en partie dans la poche (TA) et forme un support (ET) pour un dispositif électronique ; et
un élément de fixation (SN) fixant la deuxième partie de carter (EK) par rapport à la première partie de carter (GK) peut être vissé au niveau du premier raccord (01) associé dans l'espace à l'ouverture de la poche (TA), les deux parties de carter (EK, GK) pouvant être déplacées l'une par rapport à l'autre, sans destruction, à des fins d'entretien, de préférence manuellement sans outil.

2. Appareil selon la revendication 1, **caractérisé en ce que** la deuxième partie de carter (EK) comporte une section AP en forme de plaque s'étendant transversalement à l'axe longitudinal (LA) dans laquelle un évidement AK est réalisé coïncidant dans sa taille et sa forme avec le manchon entourant le canal en cas d'ouverture de canal (01) et à partir duquel une partie de forme tridimensionnelle du deuxième carter (EK) prenant la forme d'une section de support de système électronique (ET) ressort dans la direction axiale ;
la section de support (ET) formant également, outre le compartiment pour pile (BF), un logement prévu pour une platine de système électronique (EP) et pouvant être inséré dans la poche (TA) du corps de base (GK) dans la direction axiale.

3. Appareil selon l'une quelconque des revendications 1 ou 2, **caractérisé en ce que** la deuxième partie de carter (EK) engrène de façon périphérique le canal sur au moins 180° avec une section (AP).

4. Appareil selon la revendication 3, **caractérisé en ce que** l'élément de fixation est une première partie de couplage (SN) d'un couplage par enfichage.

5. Appareil selon l'une quelconque des revendications 1 à 4, **caractérisé en ce que** la deuxième partie de carter (EK) contient un compartiment pour pile (BF) pouvant être rendu étanche.

6. Appareil selon l'une quelconque des revendications 1 à 5, **caractérisé par** la présence d'une liaison d'arrêt (TS, SO, SA) amovible prévue entre la première (GK) et la deuxième (EK) partie de carter.

7. Appareil selon la revendication 6, **caractérisé en ce que** la liaison d'arrêt s'engrène à travers une ouverture (SA) pratiquée dans une paroi extérieure de la première partie de carter (GK) et est formée d'un élément de commande (TS) s'engrenant à travers elle relié à la deuxième partie de carter.

8. Appareil selon l'une quelconque des revendications 1 à 7, **caractérisé en ce que** l'agencement de rotor (TE) peut être inséré à travers l'ouverture de canal (02) lorsque le deuxième raccord est dans le canal (KA) et peut en être retiré.

9. Appareil selon la revendication 8, **caractérisé en ce que** l' agencement de rotor (TE) peut être fixé, de façon à être tendu dans le plan axial, dans le canal (KA), dans le plan axial, à l'aide d'une deuxième partie de couplage (SK) d'un couplage par enfichage pouvant être vissée dans l'ouverture de canal.
